# DEMANDE DE BREVET EUROPEEN

(11) **EP 3 700 053 A1**
(43) Date de publication de la demande: **26.08.2020**
(21) Numéro de dépôt: 20158735.9
(22) Date de dépôt: 21.02.2020
(51) Int. Cl.: H02J 7/14, H02J 7/24, H02J 7/34

(54) **SYSTÈME ET PROCÉDÉ DE PRÉCHARGE D'UN CONDENSATEUR PAR UNE BATTERIE COMPORTANT UNE RÉSISTANCE DE PRÉCHARGE ET UN DISPOSITIF HACHEUR**

(30) Priorité: 21.02.2019 FR 1901745
(71) Demandeur: Commissariat à l'énergie atomique et aux énergies alternatives, 75015 Paris (FR)
(72) Inventeur: DAUCHY, Julien, 38054 Grenoble Cedex 09 (FR); ROLLAND, Benoit, 38054 Grenoble Cedex 09 (FR); CHATROUX, Daniel, 38054 Grenoble Cedex 09 (FR)
(74) Mandataire: GIE Innovation Competence Group

(57) **Abrégé**

Procédé et Système de précharge d'un condensateur (6) par une batterie (2), comportant une résistance de précharge (9) disposée sur une première branche du circuit qui est située entre une borne de la batterie (2) et une borne du condensateur (6), et un dispositif hacheur (18, 55) monté en série avec la résistance de précharge (9, 63) sur la première branche du circuit.

## Description

### DOMAINE TECHNIQUE

L'invention concerne le domaine de l'électronique de puissance et vise un système et un procédé de précharge d'un condensateur par une batterie, ou une autre source d'énergie.

Un circuit de précharge permet d'effectuer la jonction, lors de la mise sous tension, entre une batterie, ou une autre source d'énergie électrique, et un circuit de puissance que l'on souhaite alimenter. Lors de la mise sous tension, la batterie, en tant que source de tension, est en effet généralement connectée à une charge capacitive du circuit de puissance à alimenter. Cette charge capacitive est généralement due à la présence de différents convertisseurs d'énergie qui comportent, en entrée, des condensateurs de filtrage (par exemple : des chargeurs, des convertisseurs haute tension / basse tension, des onduleurs, etc.). Lors de la connexion entre la batterie et le circuit de puissance à alimenter, la charge capacitive de ce circuit peut générer un appel de courant très élevé qui peut être dommageable voire destructeur pour les composants, et le circuit de précharge est alors nécessaire pour limiter le courant appelé par la charge capacitive dans les secondes suivant la mise sous tension.

Le circuit de précharge doit donc protéger le circuit en limitant le courant de charge des condensateurs mais doit cependant assurer la charge optimale de ces condensateurs durant, généralement, la ou les premières secondes qui suivent la connexion de la batterie et du circuit à alimenter.

### ART ANTÉRIEUR

La demande de brevet EP2731229 décrit des systèmes de précharge d'un condensateur par une batterie. Ce document décrit notamment un système de précharge selon l'art antérieur illustré par la figure 2 de ce document. Ce système comporte une première branche de circuit reliant la borne positive de la batterie à une première borne du condensateur, branche sur laquelle sont montés en série un premier interrupteur et une résistance de précharge. Une deuxième branche, en parallèle de la première branche, relie quant à elle la borne positive de la batterie et la première borne du condensateur via un deuxième interrupteur. Une troisième branche relie la borne négative de la batterie à la deuxième borne du condensateur. Ainsi, en fermant le premier interrupteur et le troisième interrupteur, le condensateur est chargé via la résistance de précharge alors que, en fermant le deuxième interrupteur et le troisième interrupteur, le condensateur est directement relié à la batterie, sans résistance de précharge. Durant la phase de précharge, après fermeture du troisième interrupteur ou simultanément avec celui-ci, le premier interrupteur est fermé tandis que le deuxième interrupteur est ouvert ce qui implique que le condensateur est chargée par la batterie avec un courant limité par la présence de la résistance de précharge. Une fois cette phase de précharge terminée, le premier interrupteur est ouvert tandis que le deuxième interrupteur est fermé, et la batterie est ainsi directement reliée au condensateur. Dans ce système, le dimensionnement de la résistance de précharge résulte d'un compromis entre, d'une part, la puissance qui sera dissipée dans la résistance de précharge et donc sa taille et, d'autre part, le temps de précharge souhaité. Pour limiter de manière plus importante le courant de précharge, il faut augmenter la valeur de la résistance de précharge, ce qui aura pour incidence d'augmenter le temps de précharge. Par ailleurs, pour dissiper la puissance, la résistance de précharge sera soit surdimensionnée, et donc encombrante et onéreuse, soit dimensionnée au plus juste et elle nécessitera alors un certain nombre de dispositifs de sécurité tels que la surveillance de sa température, la détection de courts-circuits ou de surconsommation en aval. Un autre inconvénient est que le circuit de précharge n'autorise pas la consommation de courant durant la phase de précharge. En effet, le condensateur ne se charge pas jusqu'à la tension de la batterie si un courant est consommé, durant la phase de précharge, par les équipements à alimenter.

Le document EP2731229 décrit également une invention répondant aux problèmes décrits ci-dessus. Il s'agit d'un système de précharge d'un condensateur par une batterie basé sur un dispositif à transfert d'énergie, ce qui entraine une dissipation d'énergie plus faible au niveau des composants. Un dispositif à découpage, muni d'un transistor, permet de stocker l'énergie dans une inductance pendant une période, et de fournir à nouveau en sortie tout ou partie de cette énergie grâce à une diode de roue libre. Le document WO2015/121564 décrit également un système de précharge basé sur la gestion de l'énergie au travers d'une inductance.

### EXPOSÉ DE L'INVENTION

L'invention a pour but d'améliorer les modules électroniques de puissance de l'art antérieur.

A cet effet, l'invention vise un système de précharge d'une capacité par une batterie, comportant une résistance de précharge disposée sur une première branche du circuit qui est située entre une borne de la batterie et une borne du condensateur, et qui comporte en outre un dispositif hacheur monté en série avec la résistance de précharge sur la première branche du circuit.

Dans la définition ci-dessus, de même que dans tout le texte de la présente demande, le terme « batterie » désigne aussi bien un élément unique de batterie qu'un pack composé de plusieurs éléments ou de plusieurs batteries. De même, le terme « condensateur » désigne tout élément capacitif, condensateur ou ensemble d'éléments capacitifs, devant être chargé par la batterie, et « capacité » désigne la capacité de ce condensateur ou de l'ensemble des éléments capacitifs.

Le système de précharge selon l'invention est basé sur l'utilisation d'une résistance de précharge pour limiter le courant de précharge. Cependant, la dissipation d'énergie qui a lieu dans la résistance de précharge peut être étalée dans le temps grâce au dispositif hacheur.

Contrairement aux solutions de l'art antérieur qui ont tendance à supprimer la dissipation d'énergie dans une résistance de précharge, pour la remplacer par des dispositifs basés sur d'autres principes que la dissipation d'énergie, l'invention conserve cette solution de dissiper l'énergie dans une résistance de précharge, en l'adaptant de sorte à la rendre robuste, flexible, et sure.

Grâce à l'invention, la résistance de précharge peut être dimensionnée au plus juste, voire sous-dimensionnée, sans risque de détérioration grâce à la protection que peut fournir le dispositif hacheur et sa capacité à modifier son rapport cyclique. Le rapport cyclique du dispositif hacheur permet également de contrôler le courant moyen tout au long de la durée de précharge.

Par ailleurs, le système selon l'invention ne nécessite pas le recours à un raccordement à la borne négative de la batterie, pour la mise en place, par exemple, d'une diode de roue libre. Le système selon l'invention peut donc être connecté à une seule des bornes de la batterie. Les câbles reliés respectivement aux bornes positives et négatives de la batterie peuvent donc être éloignés au maximum l'un de l'autre, ce qui permet de diminuer le risque d'arcs électriques dans le cas de batteries de forte puissance. Cette caractéristique est particulièrement avantageuse, voire nécessaire, dans certaines applications telles que les véhicules électriques.

Le fait de ne pas utiliser de diode de roue libre va à l'encontre des règles classiques de conception en électronique de puissance où l'homme de l'art cherche à augmenter les rendements et à minimiser les pertes d'énergie électrique. Ainsi, les diodes de roue libre permettent de recycler l'énergie et de l'utiliser au lieu de la dissiper.

Le système selon l'invention permet également de s'adapter à un changement de valeur des condensateurs à précharger. Notamment, si, pendant la phase de précharge, un courant est consommé par les équipements à alimenter, le rapport cyclique du dispositif hacheur peut être adapté en conséquence et la phase de précharge, notamment le temps de précharge, n'est donc pas impacté par cette consommation additionnelle.

Selon un mode de réalisation, la première branche du circuit comporte uniquement la résistance de précharge et le dispositif hacheur, à l'exclusion de tout autre élément.

L'invention vise également un procédé de précharge d'un condensateur par une batterie, mettant en oeuvre un système de précharge tel que décrit ci-dessus et comportant une phase de précharge où le dispositif hacheur est commandé en modulation de largeur d'impulsions.

Le système peut comporter les caractéristiques additionnelles suivantes, seules ou en combinaison :
- le dispositif hacheur comporte un interrupteur de découpage apte à ouvrir et fermer la première branche du circuit selon une fréquence de découpage et un rapport cyclique ;
- le rapport cyclique du dispositif hacheur augmente au fur et à mesure de la charge du condensateur ;
- le rapport cyclique est déterminé de sorte que le courant moyen ou le courant efficace dans la première branche du circuit soit le même pour chaque période de découpage ;
- le système comporte un dispositif de mesure de la température de la résistance de précharge et la précharge est empêchée lorsque la température de la résistance de précharge est supérieure à une première valeur prédéterminée ;
- la précharge est réalisée avec un rapport cyclique diminué lorsque la température de la résistance de précharge est comprise entre une deuxième valeur prédéterminée et une troisième valeur prédéterminée, la deuxième valeur prédéterminée et la troisième valeur prédéterminée étant inférieures à la première valeur prédéterminée ;
- l'interrupteur de découpage est un transistor de puissance dont la vitesse de commutation est ralentie ;
- le système comporte un dispositif de mesure d'une tension représentative de la tension aux bornes du condensateur ;
- le dispositif hacheur comporte une liaison réseau, c'est à dire une liaison à un bus de communication, par exemple un bus de données, pour avertir de la fin de la précharge ou d'un défaut ;
- le système est adapté à stopper la précharge lorsque la tension aux bornes du condensateur n'évolue pas pendant un temps prédéterminé ;
- le système comporte un premier interrupteur sur la première branche du circuit et une deuxième branche du circuit en parallèle avec la première branche, la deuxième branche comportant un deuxième interrupteur ;
- la première branche du circuit comporte uniquement la résistance de précharge et le dispositif hacheur ;
- le condensateur est réalisé par un ensemble de supercondensateurs en série ;
- le système comporte une branche supplémentaire reliant une borne des condensateurs à un démarreur de moteur thermique, et le dispositif hacheur est rendu passant lorsque le démarreur est actionné de sorte que le démarreur soit alimenté par le courant fourni par la batterie additionné du courant fourni par les condensateurs ;
- le dispositif hacheur est activé selon un mode d'hystérésis de sorte que la tension aux bornes des condensateurs est maintenue entre une valeur inférieure et une valeur supérieure.

### PRÉSENTATION DES FIGURES

Des exemples préférés de réalisation de l'invention vont maintenant être décrits en référence aux dessins annexés dans lesquels :
[Fig.1] La figure 1 est une vue schématique de la structure électrique simplifiée d'un véhicule électrique ;
[Fig.2] La figure 2 illustre un premier mode de réalisation de l'invention et représente un système selon l'invention, adapté à la précharge d'un condensateur par une batterie ;
[Fig.3] La figure 3 est une vue similaire à la figure 2, montrant plus en détails le système selon l'invention ;
[Fig.4] La figure 4 représente un pack composé de plusieurs batteries connectées en série ;
[Fig.5] La figure 5 est un diagramme illustrant le procédé selon l'invention, adapté à la précharge d'un condensateur par une batterie ;
[Fig.6] La figure 6 est un graphique illustrant la phase de précharge du système des figures 2 et 3 ;
[Fig.7] La figure 7 est un autre graphique illustrant la phase de précharge du système des figures 2 et 3 ;
[Fig.8] La figure 8 est un autre graphique illustrant la phase de précharge du système des figures 2 et 3 ;
[Fig.9] La figure 9 est un autre graphique illustrant la phase de précharge du système des figures 2 et 3 ;
[Fig.10] La figure 10 illustre un deuxième mode de réalisation et représente un système selon l'invention, adapté à la précharge de supercondensateurs dans un véhicule à moteur thermique ;
[Fig.11] La figure 11 est un graphique illustrant la phase de démarrage du moteur thermique du véhicule du mode de réalisation de la figure 10 ;
[Fig.12] La figure 12 est un autre graphique illustrant la phase de démarrage du moteur thermique du véhicule du mode de réalisation de la figure 10 ;
[Fig.13] La figure 13 est un autre graphique illustrant la phase de démarrage du moteur thermique du véhicule du mode de réalisation de la figure 10 ;
[Fig.14] La figure 14 est un graphique illustrant la phase de précharge du système de la figure 10 ;
[Fig.15] La figure 15 est un autre graphique illustrant la phase de précharge du système de la figure 10 ;
[Fig.16] La figure 16 est un autre graphique illustrant la phase de précharge du système de la figure 10.

### DESCRIPTION DÉTAILLÉE

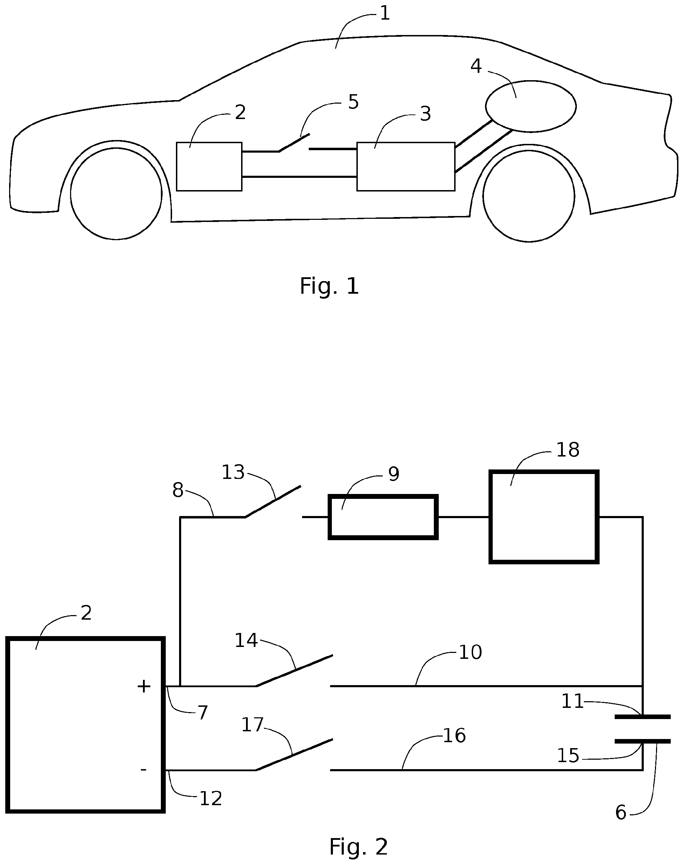

La structure électrique typique d'un véhicule électrique 1 est représentée de manière simplifiée à la figure 1. Elle comporte une batterie 2, un convertisseur 3 et un moteur électrique de propulsion 4.

Dans le cas d'un véhicule, la batterie 2 est de forte puissance et est de préférence de tension élevée, par exemple de 400 V. La batterie 2 est reliée au convertisseur 3 via un contacteur 5 permettant la mise sous tension. Le convertisseur 3 est prévu pour commander le moteur 4 et est adapté à sa technologie. Le convertisseur 3 est par exemple un onduleur.

Lorsque le véhicule 1 n'est pas en service, le contacteur 5 est ouvert.

Lorsque le véhicule 1 est mis sous tension en vue d'être utilisé, le contacteur 5 doit être fermé. A partir de la mise sous tension du véhicule 1, une première phase, dite de précharge, a lieu, phase durant laquelle tous les éléments capacitifs se trouvant en aval de la batterie 2 sont chargés par la batterie 2. Dans l'exemple de la figure 1, ces éléments capacitifs sont par exemple des condensateurs présents dans le convertisseur 3, ou tout autre condensateur d'autres équipements du véhicule 1. L'ensemble des éléments capacitifs qui doivent être chargés durant la phase de précharge sont ci-après désignés comme un seul et même condensateur dont la capacité est la résultante de cet ensemble d'éléments capacitifs, vus par la batterie 2.

Cette phase de précharge a une durée dont l'ordre de grandeur se situe autour d'une seconde et est caractérisée par la nécessité de fournir un fort courant appelé par le condensateur, surtout si ce dernier est fortement déchargé. Un système de précharge doit donc être prévu pour assurer la fonction du contacteur 5 et pour permettre la charge du condensateur tout en limitant le courant de charge afin de ne pas endommager les équipements traversés par ce courant.

La figure 2 représente un tel système de précharge disposé entre la batterie 2 et un condensateur 6 (qui représente donc l'ensemble des éléments capacitifs à charger lors de la mise sous tension). La borne positive 7 de la batterie 2 est reliée à une première borne 11 du condensateur 6 par une première branche 8 comportant, en série, un interrupteur 13, une résistance de précharge 9 et un dispositif hacheur 18. Une deuxième branche 10, en parallèle de la première branche 8, relie également la borne positive 7 de la batterie 2 à la première borne 11 du condensateur 6, via un interrupteur 14. Une troisième branche 16 relie la borne négative 12 de la batterie 2 à une deuxième borne 15 du condensateur 6, via un interrupteur 17.

Les interrupteurs 13, 14, et 17 peuvent être réalisés par exemple par des relais, des contacteurs ou des transistors de puissance.

Lorsque le véhicule n'est pas utilisé, tous les interrupteurs 13, 14, 17 sont ouverts. Lorsqu'une instruction relative à l'intention d'utiliser le véhicule est détectée, la mise sous tension a lieu. L'instruction relative à l'intention d'utiliser le véhicule peut être par exemple l'ouverture des portes ou l'insertion d'une clé de contact ou tout autre moyen ayant la même fonction. La mise sous tension s'effectue d'abord par la fermeture des interrupteurs 13 et 17, ce qui initie la phase de précharge dont la durée est de, par exemple, une seconde. Au cours de cette phase de précharge, le condensateur 6 sera chargé de manière optimale. En fin de phase de précharge, l'interrupteur 14 se ferme tandis que l'interrupteur 13 s'ouvre pour démarrer la phase de fonctionnement nominal au cours de laquelle la batterie 2 est connectée aux équipements à alimenter. Sur la figure 2, seul le condensateur 6 des équipements à alimenter est représenté.

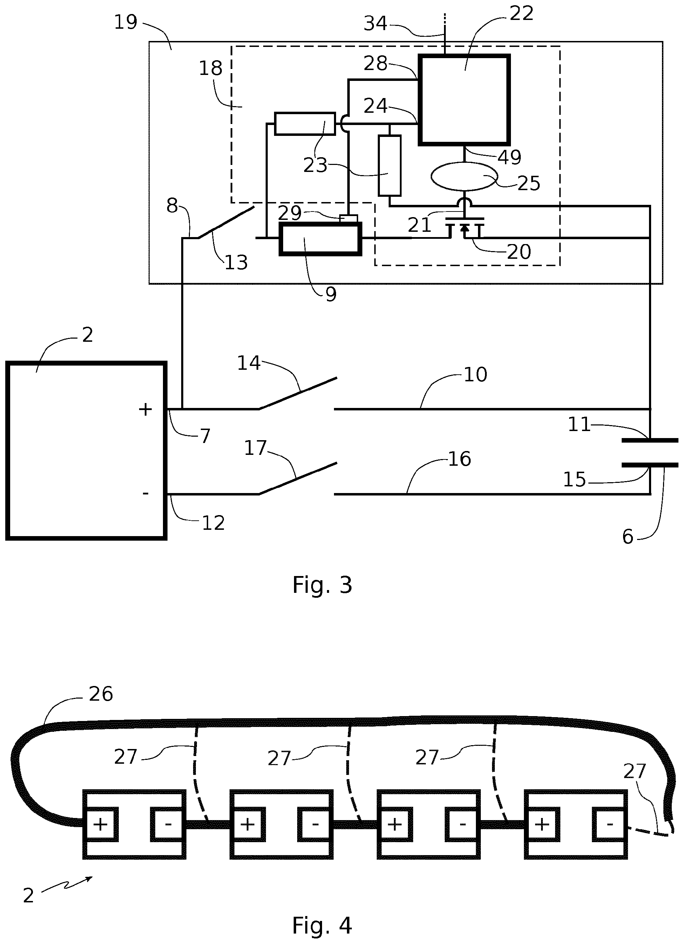

La figure 3 reprend la trame de la figure 2 en fournissant un exemple de réalisation de la première branche 8 et notamment du dispositif hacheur 18.

L'interrupteur 13, la résistance de précharge 9, et le dispositif hacheur 18 peuvent avantageusement être montés ensemble sur un même circuit imprimé 19. Ce circuit imprimé est de préférence physiquement disposé loin de la troisième branche ce qui permet un écart maximal entre les éléments connectés à la borne positive 7 de la batterie 2 et les éléments connectés à sa borne négative 12.

Le dispositif hacheur 18 comporte un interrupteur de découpage 20 qui est, dans le présent exemple, un transistor de puissance MOSFET de type N. La borne de commande 21 (la « grille ») de l'interrupteur de découpage 20 est reliée à un circuit de commande adapté à commander les modes passant et bloqué de l'interrupteur 20. Ce circuit de commande est dans le présent exemple un microcontrôleur 22 comportant une sortie 49 à modulation de largeur d'impulsion, reliée à un circuit de commande de grille 25 (« gâte driver » en anglais), et pouvant être programmé pour piloter cette sortie 49 et notamment son rapport cyclique.

Le dispositif hacheur 18 comporte également un dispositif de mesure de tension permettant d'obtenir une information de tension représentative de la tension aux bornes du condensateur 6, en vue de piloter le rapport cyclique de la sortie 49 à modulation de largeur d'impulsion dynamiquement en fonction de l'état de charge du condensateur 6. Dans le présent exemple, ce dispositif de mesure de tension est un pont diviseur de tension 23 comportant de manière classique deux résistances en série qui sont ici mises aux bornes de l'ensemble formé par la résistance de précharge 9 et l'interrupteur de découpage 20. Une entrée analogique 24 du microcontrôleur 22, munie d'un convertisseur analogique/numérique, est reliée entre les deux résistances du pont diviseur 23 pour réaliser la mesure de la tension.

Le microcontrôleur 22 peut de plus comporter une entrée 28, analogique ou numérique, de lecture de température qui est reliée à un capteur de température 29 disposé sur ou à proximité de la résistance de précharge 9.

Le microcontrôleur 22 peut par ailleurs comporter une liaison 34 à d'autres éléments de contrôle du véhicule. La liaison 34 peut par exemple être une liaison à un bus de données de type CAN (« Controler Area Network ») permettant au microcontrôleur 22 de communiquer avec l'ordinateur de bord du véhicule ou tout autre calculateur pour, par exemple, avertir de la fin de la précharge ou d'un défaut.

L'alimentation du microcontrôleur 22 n'est pas représentée. Elle peut se faire de manière classique par une batterie, par exemple une batterie d'accessoires 12 volts du véhicule, ou par tout autre moyen.

La figure 4 illustre l'intérêt d'éloigner au maximum l'un de l'autre le circuit connecté à la borne positive de la batterie et le circuit connecté à la borne négative de la batterie. Dans cet exemple, la batterie 2, d'une tension de 400 volts, est constituée d'un pack de quatre batteries de 100 volts chacune, mises en série. Un conducteur 26 est relié à la borne positive du pack de batteries. La figure 4 représente une situation à éviter dans laquelle le conducteur 26 est maintenu à proximité du pack de batteries, par exemple pour connecter une diode de roue libre avec la borne négative, comme dans l'art antérieur décrit précédemment. Dans cette configuration, un risque d'arc électrique et/ou de court-circuit est matérialisé sur la figure par des lignes pointillées 27. L'invention permet ici d'éviter cette configuration en éloignant le plus possible le conducteur 26 du pack de batterie dès sa connexion à la borne positive.

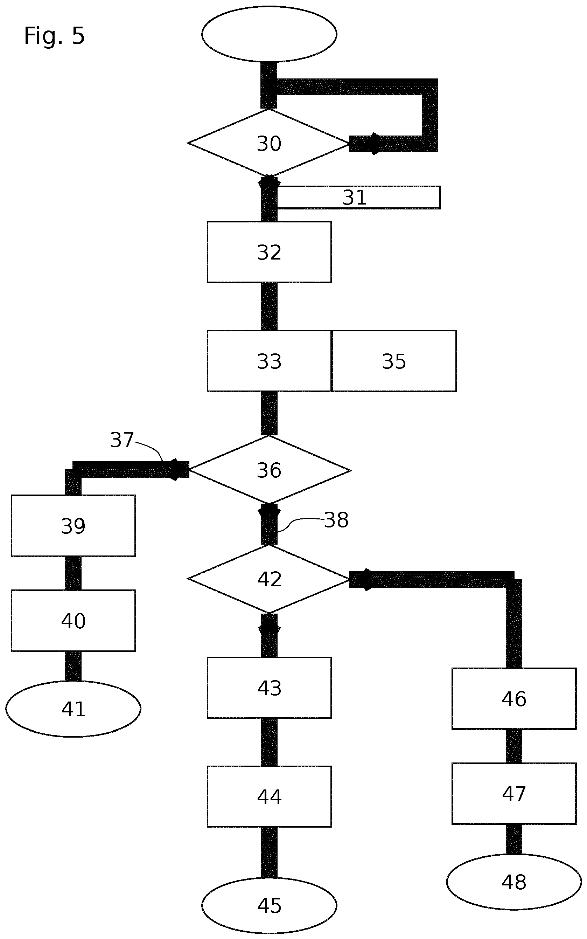

La figure 5 illustre un procédé de commande du système de précharge. Ce procédé décrit une programmation possible pour le microcontrôleur 22.

Lors d'une première étape 30, la température de la résistance de précharge 9 est contrôlée (grâce au capteur 29 de la figure 3) et est comparée à une première température prédéterminée. Si la température de la résistance de précharge 9 est supérieure à cette première température prédéterminée, le système reboucle sur cette première étape 30. Tant que la température de la résistance de précharge 9 est supérieure à cette température maximale, la résistance de précharge 9 est considérée comme ne pouvant supporter une phase de précharge du condensateur 6, et le système continue de reboucler sur la première étape 30 sans initier la phase de précharge. Cette mesure de température n'est pas destinée au pilotage du dispositif hacheur 18 mais seulement à garantir que la résistance est en état de supporter une étape de précharge à venir. Par ailleurs, selon une caractéristique optionnelle, si la résistance de précharge est déjà chaude (tout en restant acceptable pour démarrer la phase de précharge), l'évolution du rapport cyclique durant la phase de précharge peut être adaptée en conséquence pour dissiper moins d'énergie dans ce cas. Autrement dit, selon cette caractéristique optionnelle, si la température de la résistance de précharge est comprise entre une deuxième valeur prédéterminée et une troisième valeur prédéterminée, la deuxième valeur prédéterminée et la troisième valeur prédéterminée étant inférieures à la première valeur prédéterminée, la précharge est bien réalisée mais avec un rapport cyclique diminué.

A titre d'exemple, pour une application automobile, la première température prédéterminée peut être de 65 °C, la deuxième température prédéterminée peut être de 55 °C, et la troisième température prédéterminée peut être de 60 °C.

Lorsque la température de la résistance de précharge 9 est inférieure à la température maximale admissible (la première température prédéterminée), le système attend la vérification d'une condition 31 qui est un ordre de début de phase de précharge (lié par exemple à la détection de la mise sous tension et pouvant être reçu par la liaison CAN 34). Le système passe alors à l'étape 32 dans laquelle les interrupteurs 13 et 17 sont fermés, puis à l'étape 33 au cours de laquelle sera réalisée la précharge.

Durant cette étape 33, l'interrupteur de découpage 20 est commandé en modulation de largeur d'impulsions pendant toute la phase de précharge. La fréquence de hachage est avantageusement supérieure à 20 kHz pour ne pas générer de bruit audible.

Durant l'étape 33, le rapport cyclique de la commande à modulation de largeur d'impulsions augmente au fur et à mesure de la charge du condensateur 6. En début de charge, ce rapport cyclique est minimal, par exemple 1 à 2 % car le courant appelé par le condensateur 6 est important et l'énergie dissipée par la résistance de précharge est donc également importante. En fin de charge, le rapport cyclique est maximal, par exemple 95 à 99 %, car le courant appelé par le condensateur 6 a diminué.

Cette étape 33 a lieu en parallèle d'une étape 35 durant laquelle l'évolution de la charge du condensateur 6 est surveillée. Durant l'étape 35, la tension aux bornes de l'ensemble formé par la résistance de précharge 9 et l'interrupteur de découpage 20 est mesurée grâce au pont diviseur 23. Cette mesure de tension réalisée au niveau du pont diviseur 23 est représentative de la tension au bornes du condensateur 6 (la tension de la batterie étant considérée comme constante, particulièrement dans le cas de batteries de forte tension, par exemple 400 volts), et permet donc de surveiller l'évolution de la tension aux bornes du condensateur 6 et donc son état de charge. Au lancement de la phase de précharge, le condensateur 6 évolue entre son état déchargé (correspondant, au minimum, à une tension nulle à ses bornes) et son état chargé (correspondant, au maximum, à une tension à ses bornes égale en valeur à la tension de la batterie 2). Entre ces deux extrêmes, le rapport cyclique du dispositif hacheur 18 est augmenté, par exemple linéairement.

Lors du lancement des étapes 33 et 35, la première mesure de tension au pont diviseur 23 va déterminer la tension de la batterie 2 car la précharge n'a pas commencé et la tension batterie est alors appliquée aux bornes de l'ensemble formé par la résistance de précharge 9 et l'interrupteur de découpage 20. Quelle que soit la valeur de cette tension mesurée, le programme la prendra comme tension de référence et appliquera le rapport cyclique minimum défini (2% par exemple). Ensuite, toujours en fonction de cette mesure dynamique de tension, le programme applique, pour la commande à modulation de largeur d'impulsions, un rapport cyclique inversement proportionnel à la tension mesurée aux bornes de la résistance de précharge 9. En résumé, lorsque la tension aux bornes de la résistance de précharge 9 est égale, en valeur, à la tension aux bornes de la batterie 2, le rapport cyclique est minimal (par exemple 2%), et lorsque la tension aux bornes de la résistance de précharge 9 est égale à 0, le rapport cyclique est maximal (par exemple 100%).

Cette évolution du rapport cyclique a pour but d'étaler la dissipation énergétique de la résistance de précharge dans le temps. C'est-à-dire que l'intégrale du courant dans chaque période de découpage (ici, 50 µs, si l'on considère une fréquence de 20 kHz) est toujours la même. Autrement dit, la moyenne du courant pendant la précharge est constante. Au lancement des étapes 33 et 35, si le condensateur 6 est totalement déchargé, la tension aux bornes de la résistance de précharge 9 est équivalente à la tension batterie 2. Pour que le courant qui traverse la résistance de précharge 9 ne soit pas maximal, ce qui entrainerait une trop importante dissipation d'énergie par la résistance de précharge 9, la précharge est alors volontairement ralentie en début de précharge pour limiter le courant moyen en appliquant le rapport cyclique le plus petit possible. A l'inverse, à la fin de la précharge le condensateur 6 est presque totalement chargé et le courant qui traverse la résistance de précharge 9 est faible. La précharge est alors accélérée en appliquant un grand rapport cyclique.

Ce système permet de limiter le temps d'appel de courant que génère le condensateur 6 et de le maitriser tout au long du processus de précharge en adaptant le rapport cyclique du dispositif hacheur en fonction du courant qui traverse la résistance de précharge 9. Plusieurs stratégies sont possibles, par exemple, à courant moyen constant comme décrit ci-dessus, ou encore à courant efficace constant pour avoir une puissance dissipée constante sur chaque période de la commande à modulation de largeurs d'impulsions.

Par rapport à un système résistif selon l'état de l'art, la valeur de la résistance de précharge 9 choisie peut être plus faible puisque le dispositif hacheur 18 permet de maitriser la puissance dissipée par la résistance de précharge 9 à chaque période de la commande à modulation de largeur d'impulsions.

Sur le diagramme de la figure 5, les étapes 33 et 35 sont suivies d'une étape 36 qui vise la détection d'une anomalie de type court-circuit. L'étape 36 vérifie si la tension aux bornes du condensateur 6 a bien évolué depuis une durée prédéterminée, par exemple 200 millisecondes. Si, au cours des étapes 33 et 35, la tension aux bornes du condensateur 6 n'a pas évolué depuis plus de 200 millisecondes, le système considère qu'une anomalie de type court-circuit est apparue, et le procédé passe à la branche 37. Si, en fin d'étapes 33 et 35, si le condensateur est considérée comme chargée avec la tension aux bornes du condensateur 6 ayant dument évolué, le système passe à la branche 38.

À la branche 37, une première étape 39 active une procédure de sécurité relative à la détection d'une anomalie de type court-circuit. La précharge est arrêtée et les interrupteurs 13 et 17 sont ouverts. Ensuite, au cours d'une étape 40, le système avertit l'utilisateur, ou un autre système du véhicule, de l'anomalie, et le procédé se termine par une étape de fin 41 d'attente de dépannage.

À la branche 38, une première étape 42 vérifie si, au bout d'un temps prédéterminé, par exemple 3 secondes, la tension aux bornes du condensateur 6 est supérieure à une valeur seuil, par exemple 95 % de la tension de la batterie 2. Si c'est bien le cas, la phase de précharge est considérée comme complète et, au cours d'une étape 43, la commande de l'interrupteur de découpage 20 est arrêtée et l'interrupteur 14 est fermé. Puis, lors d'une étape 44, l'interrupteur 13 est ouvert et le système passe en fonctionnement normal. Une étape de fin 45 permet optionnellement d'avertir l'utilisateur ou un autre système du véhicule de la fin de la précharge.

Alternativement, l'étape 42 peut détecter que, au bout du temps prédéterminé de 3 secondes, la tension aux bornes du condensateur 6 est inférieure à la valeur seuil de 95 % de la tension de la batterie 2. Si tel est le cas, un élément consommant anormalement de l'énergie, voire un court-circuit, est présent. Le procédé passe alors à une étape de sécurité 46 où la précharge est arrêtée et les interrupteurs 13 et 17 sont ouverts. Ensuite, au cours d'une étape 47, le système avertit l'utilisateur, ou un autre système du véhicule, de l'anomalie, et le procédé se termine par une étape de fin 48 d'attente de dépannage.

Ces procédures de sécurité, associées au fait que la commande de l'interrupteur de découpage 20 démarre toujours par un rapport cyclique très faible, permettent d'éviter toute casse de la résistance de précharge 9. La résistance de précharge 9 peut alors être dimensionnée au plus juste, c'est à dire en fonction de l'énergie qu'elle a à dissiper. À l'inverse des résistances de précharge de l'art antérieur qui doivent être surdimensionnées, la résistance de précharge 9 peut même être sous dimensionnée.

Dans le présent exemple, la résistance de précharge 9 peut être une résistance de puissance d'une valeur de 15 Ω et d'une puissance nominale de 50 W

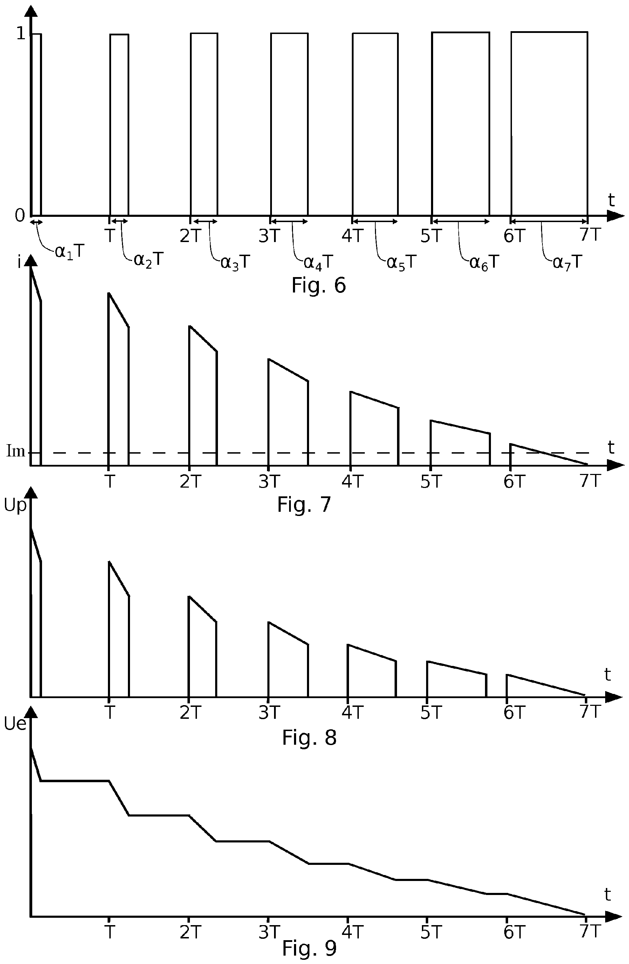

Les figures 6 à 9 illustrent spécifiquement l'étape 33 du procédé qui vient d'être décrit. Ces figures représentent respectivement, en fonction du temps, le signal de découpage, le courant traversant la résistance de précharge 9, la tension Up aux bornes de la résistance de précharge 9 et la tension Ue aux bornes de l'ensemble formé par la résistance de précharge 9 et l'interrupteur de découpage 20, durant toute une étape de précharge du condensateur 6, suivant une période T de découpage.

La figure 6 représente l'état ouvert (0) ou fermé (1) de l'interrupteur de découpage 20 en fonction du temps. Dans cet exemple simplifié, le dispositif hacheur 18 travaille selon une fréquence de découpage constante et la charge complète du condensateur 6 dure le temps de 7 périodes T au cours desquelles un rapport cyclique α₁ à α₇ croissant est appliqué. Le rapport cyclique initial α₁ peut être de 2 % et le rapport cyclique final α₇ peut être de 100 %, les rapports cycliques intermédiaires α₂ à α₆ augmentant progressivement au fur et à mesure de la charge.

La figure 7 montre l'évolution du courant i traversant la résistance de précharge 9 et le condensateur 6 en fonction du temps. L'intensité de ce courant diminue pendant chaque nouvelle période de hachage, au fur et à mesure de la charge du condensateur 6 qui donc appelle de moins en moins de courant. Un nouveau rapport cyclique α est déterminé pour chaque période T de sorte que le courant moyen Im (ou alternativement le courant efficace) soit le même pour chaque période T.

La figure 8 Up aux bornes de la résistance de précharge 9, cette tension ayant la même forme que le courant sur la figue 7 (loi d'Ohm).

La figure 9 représente la tension Ue mesurée par le pont diviseur 23, qui est placé aux bornes de l'ensemble formé par la résistance de précharge 9 et l'interrupteur de découpage 20, en fonction du temps. L'évolution de cette tension est représentative, en étant l'opposé, de l'évolution de la tension aux bornes du condensateur 6. Cette tension aux bornes de l'ensemble formé par la résistance de précharge 9 et l'interrupteur de découpage 20 diminue à chaque phase de fermeture de l'interrupteur de découpage 20 suivant une pente qui diminue au fur et à mesure de la charge du condensateur 6 et suivant une durée qui augmente avec l'augmentation du rapport cyclique a. En fin de charge, à la septième période T, cette tension est presque nulle, tandis que la tension aux bornes du condensateur 6 est maximale, c'est à dire égale à la tension de la batterie 2.

Comme l'invention autorise d'utiliser des résistances de faibles valeurs, le condensateur 6 se charge presque jusqu'à la tension batterie même dans le cas où une charge supplémentaire consomme du courant durant la phase de précharge. Lorsque les interrupteurs principaux 14, 17 se ferment, en fin de précharge, il n'y a alors presque pas de différence de tension entre la batterie et le condensateur 6, et donc pas de pic de courant provoqué par une telle différence de tension.

Le dispositif hacheur 18 permet ainsi de limiter le courant dans la résistance de précharge 9 tout en étalant dans le temps la dissipation d'énergie réalisée par cette résistance 9. On évite une surchauffe de la résistance de précharge 9 aussi bien globale que locale car la chaleur dispose du temps nécessaire pour se diffuser au sein de la résistance 9. La dissipation d'énergie dans la résistance 9 est un choix qui va à l'encontre de l'utilisation classique d'un dispositif hacheur ayant pour objectif d'augmenter les rendements. Ici, le dispositif hacheur est destiné à contrôler la dissipation d'énergie. Cependant, l'énergie dissipée lors de la précharge est négligeable par rapport à celle globalement mise en œuvre. Par exemple, un condensateur de 1 mF chargée sous 400V correspond à une énergie de 80 joules. Si aucun courant n'est consommé par ailleurs, le circuit de précharge aura donc 80 joules à dissiper alors qu'un pack batterie de 10 kWh stocke 36 MJ.

Par ailleurs, le transistor peut être placé sur un radiateur, mais le dimensionnement de celui-ci est alors particulier car sa fonction sera d'être une capacité thermique pour augmenter la capacité de stockage et de diffusion de la chaleur du transistor, plutôt qu'un échangeur de chaleur avec l'air. Ce radiateur fournira donc d'abord une masse de stockage de chaleur, et seulement ensuite, éventuellement, une surface d'échange thermique.

Selon une caractéristique préférée, la commutation de l'interrupteur de découpage 20 est ralentie. Lorsque l'interrupteur de découpage 20 est par exemple un MOSFET, sa vitesse de commutation peut par exemple être ralentie en prévoyant une grande résistance de grille, par exemple, en multipliant par 10 au moins, la résistance de grille par rapport à un dimensionnement classique. Ainsi, pour un MOSFET qui nécessiterait dans cette application une résistance de 10 Ω connectée à sa grille, on choisira plutôt une résistance de 1 kΩ pour obtenir un allongement avantageux de la vitesse de commutation. Ce ralentissement de la vitesse de commutation va à l'encontre de l'utilisation classique des interrupteurs commandés où l'on cherche au contraire à augmenter les vitesses de commutation pour limiter les pertes et augmenter les rendements. Cependant, dans cette application, le ralentissement de la vitesse de commutation de l'interrupteur de découpage 20 permet le passage de l'énergie accumulée par l'inductance parasite du circuit et la dissipation de celle-ci dans l'interrupteur de découpage 20. En effet, le câblage présente généralement une inductance parasite qui peut être conséquente et le montage décrit conduit donc à mettre en série l'interrupteur de découpage 20 avec une inductance parasite de câblage. Classiquement, le câblage de la batterie 2 jusqu'au condensateur 6 a une longueur de plusieurs mètres, ce qui correspond à plusieurs microhenrys d'inductance de câblage. À chaque ouverture de l'interrupteur de découpage 20, l'énergie accumulée par l'inductance de câblage doit être dissipée. Bien que le ralentissement de la vitesse de commutation de l'interrupteur de découpage 20 entraine un échauffement et une perte d'énergie, il permet de réduire le phénomène de surtension dû à cette inductance de câblage parasite et protège l'interrupteur de découpage 20.

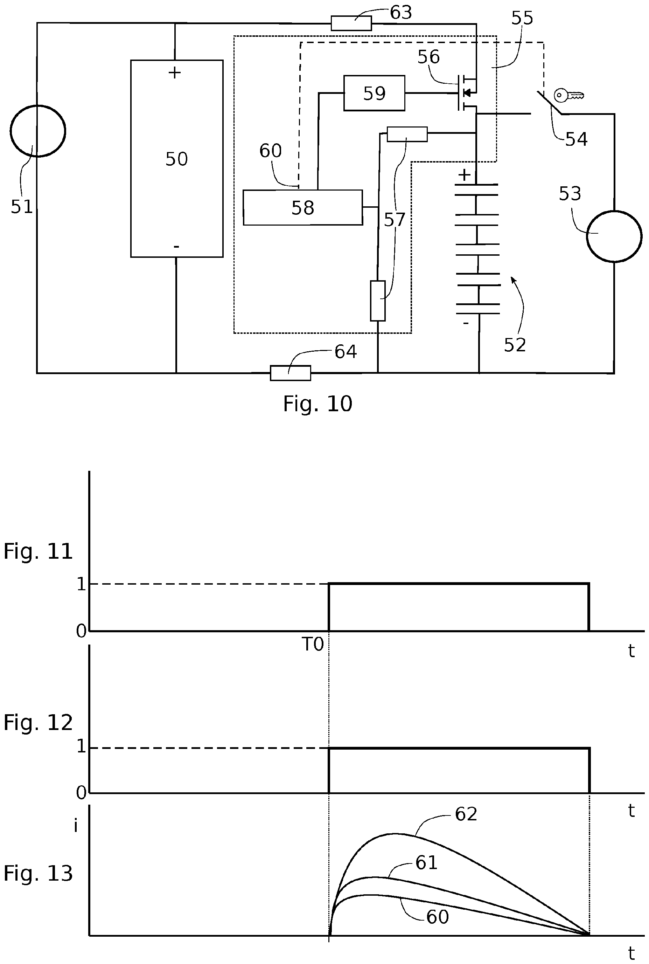

Un deuxième mode de réalisation de l'invention va maintenant être décrit en référence aux figures 10 à 16.

Ce deuxième mode de réalisation vise un véhicule à moteur thermique comportant pour son démarrage une batterie, en général de 12 V, et un pack de supercondensateurs. Les supercondensateurs, également dénommées supercapacités, sont des condensateurs capables de délivrer des puissances importantes et susceptibles de se recharger rapidement.

Une telle configuration, alliant une batterie 12 V et un pack de supercondensateurs, peut être par exemple rencontrée dans les véhicules à moteur thermique dotés d'un système couramment dénommé « start & stop ». Ce système éteint le moteur et le rallume après chaque arrêt du véhicule (à un feu rouge par exemple), ce qui a pour conséquence d'accélérer le vieillissement des batteries au plomb ou au lithium utilisées comme batterie de démarrage 12 V, car le courant appelé est fort et ces batteries supportent mal les décharges violentes suivies d'une recharge rapide. Le démarreur électrique d'un moteur thermique est un composant qui demande un fort courant au démarrage. C'est pourquoi des supercondensateurs peuvent être utilisées pour assister la batterie à fournir ce courant car ils possèdent la particularité de pouvoir fournir de forts courants pendant un court instant sans être détériorées. De plus, les supercondensateurs ont la particularité de pouvoir fonctionner dans des plages de températures importantes, ce qui présente un avantage par rapport aux batteries au plomb ou surtout au lithium-ion dont les technologies actuelles sont trop résistives à basses températures. Ces supercondensateurs peuvent être utilisées au moment du démarrage du moteur thermique et principalement pour fournir un fort courant initial au démarreur électrique.

Les supercondensateurs ont cependant les deux caractéristiques contraignantes suivantes qui les rendent difficiles à mettre en œuvre.

D'une part, lors de leur recharge, il ne faut en aucun cas dépasser leur tension maximale sous peine de les détériorer (en général, de 2 V à 2.7 V selon le type de supercondensateur). Les véhicules thermiques possèdent généralement un alternateur délivrant par exemple une tension de 13.8 V suffisante pour recharger la batterie 12 V, alimenter les accessoires, mais pas trop élevée pour pouvoir maintenir la batterie sous tension constante, dite « de floating » (en anglais), sans la détériorer. Il est donc nécessaire de prévoir un pack de supercondensateurs capables de supporter cette tension définie par l'alternateur.

D'autre part, les supercondensateurs possèdent des courants de fuite en interne, de l'ordre de 1 mA à 5 mA par exemple, selon la tension à leurs bornes et la température de ces composants. Ils se déchargent donc constamment. Si ceux-ci sont connectés en permanence à la batterie, ce courant de fuite accélère la décharge de la batterie lors des longs stockages du véhicule. Si les supercondensateurs sont déconnectés de la batterie pendant les longs stockages, il faut ensuite les recharger rapidement avant de pouvoir démarrer le véhicule.

L'invention est particulièrement adaptée à la précharge d'un condensateur constituée d'un pack de tels supercondensateurs. Notamment, lors des cas où les supercondensateurs sont déconnectés de la batterie pendant des phases de long stockage, et qui nécessitent donc une recharge, par un circuit de précharge, pour pouvoir ensuite participer au démarrage du véhicule.

La figure 10 illustre une telle configuration comportant une batterie 50, un alternateur 51 rechargeant la batterie 50 lorsque le moteur thermique tourne, un pack de supercondensateurs 52, un démarreur 53 pour le démarrage du moteur thermique, et un contacteur 54 d'actionnement du démarreur 53. Le circuit comporte ici une branche supplémentaire reliant une borne des supercondensateurs 52 à une borne du démarreur 53 via le contacteur 54.

La batterie 50, qui est dans le présent exemple une batterie 12 V, peut être mise en parallèle avec les supercondensateurs 52 et cet ensemble peut alimenter le démarreur 53 lorsque le contacteur 54 est fermé, actionné par exemple par une clé de contact au tableau de bord du véhicule.

Un dispositif hacheur 55 est prévu entre la batterie 50 et les supercondensateurs 52. Le dispositif hacheur 55 comporte un interrupteur de découpage 56, un pont diviseur 57, un microcontrôleur 58 et son circuit de commande de grille 59 permettant de piloter l'interrupteur de découpage 56.

Le pont diviseur 57 a la même fonction que dans le premier mode de réalisation mais il mesure ici, en variante, directement la tension aux bornes des supercondensateurs 52. Cette mesure prise aux bornes des supercondensateurs 52 peut s'avérer plus précise pour contrôler la charge de ces dernières mais impose une connexion d'une des résistances du pont à la branche du circuit qui relie la borne négative de la batterie et la borne négative des supercondensateurs 52. Cette connexion ne permet pas de bénéficier des avantages exposés précédemment, liés au fait que le système de précharge n'a pas besoin de connexion à la borne négative de la batterie. En variante, si l'on souhaite bénéficier de ces avantages, le pont diviseur peut bien entendu être agencé comme dans le premier mode de réalisation, ou de toute autre manière où il serait indépendant de la borne négative de la batterie.

Le microcontrôleur 58 comporte ici de plus une entrée 60 lui permettant de connaitre l'état du contacteur 54.

Le microcontrôleur 58 gère la phase de démarrage du moteur thermique et les phases de précharge des supercondensateurs 52. Pour ces phases de précharge des supercondensateurs 52, une résistance de précharge est prévue, de la même manière que pour le premier mode de réalisation. La résistance de précharge peut être constituée par une résistance de précharge 63 située du côté positif de la batterie 50, ou par une résistance de précharge 64 située du côté négatif de la batterie 50, ou par ces deux résistances à la fois. Dans la présente application, les puissances en jeu étant très importantes et les câblages dimensionnés en conséquence, les résistances de précharge 63, 64 peuvent être simplement constituées par la résistance du câblage. La commande à largeur d'impulsion du microcontrôleur 58 permettant d'initialiser la phase de précharge avec un très faible rapport cyclique, ce mode de réalisation qui emploie la résistance du câblage comme résistance de précharge 63, 64 peut être effectivement mise en œuvre. Du fait du volume de cuivre concerné, l'élévation de température des câblages est limitée à quelques dizaines de degrés.

Le dispositif hacheur 55 est disposé sur une première branche du circuit qui relie la borne positive de la batterie 50 et la borne positive du pack de supercondensateurs 52. Dans ce mode de réalisation, cette première branche du circuit est la seule à relier la borne positive de la batterie 50 et la borne positive des supercondensateurs 52. De plus, cette première branche du circuit comporte uniquement une résistance de précharge 63, qui dans cette exemple est constituée par la résistance du câblage.

Les figures 11 à 13 illustrent la phase de démarrage du moteur thermique lorsque le pack de supercondensateurs est préalablement chargé. La figure 11 représente l'état du contacteur 54 entre son état ouvert (0) et son état fermé (1) en fonction du temps t. La figure 12 représente l'état de l'interrupteur de découpage 56 entre son état ouvert (0) et son état fermé (1) en fonction du temps t. La figure 13 présente une courbe 60 du courant de la batterie 50, une courbe 61 du courant des supercondensateurs 52, et une courbe 62 de la somme du courant de la batterie 50 et du courant des supercondensateurs 52, en fonction du temps t.

A l'instant T0 d'actionnement du contacteur 54, en vue de démarrer le moteur thermique, le microcontrôleur 58 rend complètement passant l'interrupteur de découpage 56, ce qui permet d'alimenter le démarreur par le courant des supercondensateurs 52 additionné du courant de la batterie 50 (courbe 62).

Alternativement, le microcontrôleur 58 peut piloter l'interrupteur de découpage 56 en mode de découpage, pour que les supercondensateurs 52 ne fournissent qu'un courant limité par hachage au démarreur 53.

En dehors des périodes de démarrage du moteur, le microcontrôleur 58 est adapté à piloter l'interrupteur de découpage 56 en modulation de largeur d'impulsion pour la précharge des supercondensateurs, de la même manière que dans le premier mode de réalisation. Dans cet exemple, le microcontrôleur autorise la précharge des supercondensateurs quand le moteur thermique tourne, par exemple immédiatement après le démarrage comme dans l'exemple de la figure 12 ou après un délai après le démarrage du moteur thermique. Lorsque le moteur tourne, une tension (généralement 13, 8 V) apparait aux bornes de l'alternateur 51. Par contre, après une phase longue de stockage véhicule, la précharge doit avoir lieu préalablement au démarrage du moteur thermique du fait de la décharge des supercondensateurs.

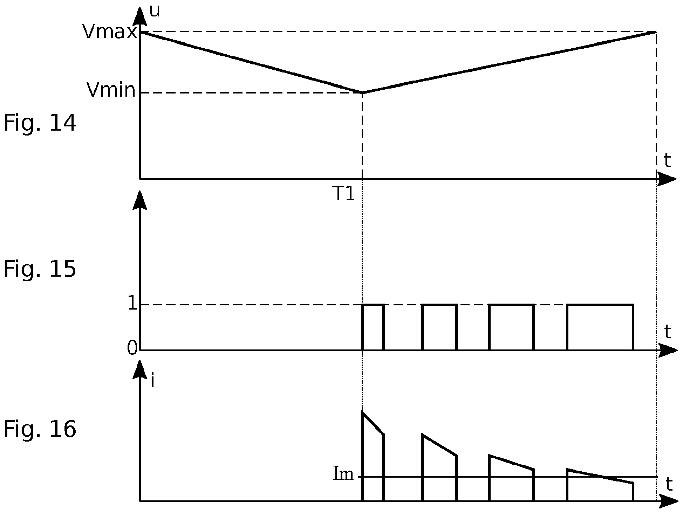

Les figures 14 à 16 illustrent les modes de précharge des supercondensateurs 52. La figure 14 représente l'évolution de la tension u aux bornes des supercondensateurs 52 en fonction du temps t. La figure 15 représente le signal à modulation de largeur d'impulsions du microcontrôleur 58 en fonction du temps t. La figure 16 représente l'évolution du courant i de recharge des supercondensateurs 52 en fonction du temps t.

Selon cet exemple, l'interrupteur de découpage 56 est piloté selon un mode d'hystérésis représenté à la figure 14. La tension aux bornes des supercondensateurs 52 est maintenue entre une valeur Vmin et une valeur Vmax. Dans le présent exemple, la valeur Vmin est de 12 V et la valeur Vmax est de 13,4 V.

Tant que la tension aux bornes des supercondensateurs 52 est entre ces valeurs Vmin et Vmax, l'interrupteur de découpage 56 est maintenu ouvert (non conducteur).

Lorsque la tension aux bornes des supercondensateurs 52 descend jusqu'à la valeur Vmin, à l'instant T1, la phase de précharge débute et la commande en modulation de largeur d'impulsions de l'interrupteur de découpage 56 est mise en œuvre (voir figure 15).

De même que pour le premier mode de réalisation, le rapport cyclique augmente au fur et à mesure du déroulement de la phase de précharge, de sorte que le courant moyen Im soit le même pour chaque période de découpage (voir figure 16).

Lorsque la tension au bornes des supercondensateurs 52 monte jusqu'à la valeur Vmax, la phase de précharge est terminée et l'interrupteur de découpage 56 est alors maintenu ouvert de sorte à garantir que les supercondensateurs ne verront jamais une tension supérieure à la tension Vmax à leurs bornes, et donc à augmenter leur durée de vie. Le système assure de plus la déconnexion des supercondensateurs lorsque le véhicule est en stockage de longue durée.

Une application particulièrement avantageuse de l'invention vise le cas où le pack de supercondensateurs est constitué de 5 supercondensateurs en série dont la tension maximale de chacune est de 2,7 V. Ces supercondensateurs de 2,7 V sont des supercondensateurs actuellement classiquement disponibles. Dans ce cas, en se référant à une tension d'alternateur 51 de 13,8 V, la sécurité vis à vis des supercondensateurs imposerait de prévoir 6 de ces supercondensateurs en série, pour atteindre une tension maximale aux bornes du pack de 16, 2 V, tension supérieure à ce que l'alternateur peut délivrer. L'invention permet d'utiliser un pack de 5 supercondensateurs seulement (qui a donc une tension maximale de 13,5 V) et de sécuriser la tension maximale à 13,5 V dans tous les cas de figure, grâce à la commande par hystérésis décrite ci-dessus. Un pack de 5 supercondensateurs en série est moins onéreux, fournit une meilleure capacité qu'un pack de 6 supercondensateurs en série, stocke une énergie supérieure et présente une résistance série interne plus faible.

L'invention permet ici, par la commande de l'interrupteur de découpage 56 de limiter et réguler la tension aux bornes des supercondensateurs 52 pour limiter la tension aux bornes de la mise en série à 13,5 V ou moins, ce qui permet donc de limiter la tension aux bornes de chacun des supercondensateurs à 2,7 V, ou une valeur un peu inférieure pour augmenter la durée de vie.

D'autres variantes de réalisation du système de précharge peuvent être mises en œuvre sans sortir du cadre de l'invention. Par exemple, le pilotage de l'interrupteur de découpage peut être réalisé par tout autre moyen, numérique ou analogique, qu'un microcontrôleur. De même, une autre commande que la modulation de largeur d'impulsions peut être mise en œuvre pendant la phase de précharge, cette commande permettant d'obtenir un courant moyen ou efficace constant sur chaque période de découpage.

La tension représentative de la tension aux bornes du condensateur peut être une autre tension que celles décrites, mesurée par tout moyen connu. Plusieurs moyens de mesure de tension, tels que les ponts diviseurs, peuvent être employés pour mesurer cette tension représentative, aux bornes de la résistance de précharge ou ailleurs, avec des coefficients différents pour améliorer la précision des mesures.

Les modes de réalisation décrits peuvent également être combinés.

## Revendications

1. Système de précharge d'un condensateur (6, 52) par une batterie (2, 50), comportant une résistance de précharge (9, 63) disposée sur une première branche du circuit qui est située entre une borne de la batterie (2, 50) et une borne du condensateur (6, 52), **caractérisé en ce qu'**il comporte en outre un dispositif hacheur (18, 55) monté en série avec la résistance de précharge (9, 63) sur la première branche du circuit.

2. Système selon la revendication 1, **caractérisé en ce que** le dispositif hacheur (18, 55) comporte un interrupteur de découpage (20, 56) apte à ouvrir et fermer la première branche du circuit selon une fréquence de découpage et un rapport cyclique.

3. Système selon la revendication 2, **caractérisé en ce que** le rapport cyclique du dispositif hacheur (18, 55) augmente au fur et à mesure de la charge du condensateur (6, 52).

4. Système selon l'une des revendications 2 et 3, **caractérisé en ce que** le rapport cyclique est déterminé de sorte que le courant moyen ou le courant efficace dans la première branche du circuit soit le même pour chaque période de découpage.

5. Système selon l'une des revendications 2 à 4, **caractérisé en ce qu'**il comporte un dispositif (29) de mesure de la température de la résistance de précharge (9, 63) et **en ce que** la précharge est empêchée lorsque la température de la résistance de précharge (9, 63) est supérieure à une première valeur prédéterminée.

6. Système selon la revendication précédente, **caractérisé en ce que** la précharge est réalisée avec un rapport cyclique diminué lorsque la température de la résistance de précharge est comprise entre une deuxième valeur prédéterminée et une troisième valeur prédéterminée, la deuxième valeur prédéterminée et la troisième valeur prédéterminée étant inférieures à la première valeur prédéterminée.

7. Système selon l'une des revendications 2 à 6, **caractérisé en ce que** l'interrupteur de découpage est un transistor de puissance (20, 56) dont la vitesse de commutation est ralentie.

8. Système selon l'une quelconque des revendications précédentes, **caractérisé en ce qu'**il comporte un dispositif (23, 57) de mesure d'une tension représentative de la tension aux bornes du condensateur (6, 52).

9. Système selon l'une quelconque des revendications précédentes, **caractérisé en ce que** le dispositif hacheur (18, 55) comporte une liaison (34) à un bus de données, pour avertir de la fin de la précharge ou d'un défaut.

10. Système selon l'une quelconque des revendications précédentes, **caractérisé en ce qu'**il est adapté à stopper la précharge lorsque la tension aux bornes du condensateur (6, 52) n'évolue pas pendant un temps prédéterminé.

11. Système selon l'une quelconque des revendications précédentes, **caractérisé en ce qu'**il comporte un premier interrupteur (13) sur la première branche (8) du circuit et **en ce qu'**il comporte une deuxième branche (10) du circuit en parallèle avec la première branche (8) et comportant un deuxième interrupteur (14).

12. Système selon l'une des revendications 1 à 10, **caractérisé en ce que** la première branche du circuit comporte uniquement la résistance de précharge (63) et le dispositif hacheur (55).

13. Système selon la revendication 12, **caractérisé en ce qu'**il comporte une branche supplémentaire reliant une borne du condensateur (52) à un démarreur (53) de moteur thermique, et **en ce que** le dispositif hacheur (55) est rendu passant lorsque le démarreur (53) est actionné, de sorte que le démarreur (53) est alimenté par le courant fourni par la batterie (50) additionné du courant fourni par le condensateur (52).

14. Système selon l'une des revendications 12 et 13, **caractérisé en ce que** le dispositif hacheur (55) est activé selon un mode d'hystérésis de sorte que la tension aux bornes du condensateur (52) est maintenue entre une valeur inférieure (Vmin) et une valeur supérieure (Vmax).

15. Procédé de précharge d'un condensateur (6, 52) par une batterie (2, 50), **caractérisé en ce qu'**il met en œuvre un système selon l'une quelconque des revendications précédentes, et **en ce qu'**il comporte une phase de précharge (33) où le dispositif hacheur est commandé en modulation de largeur d'impulsions.
